## Europäisches Patentamt

## European Patent Office

## Office européen des brevets

(11) Veröffentlichungsnummer: **0 141 942**
**A1**

# EUROPÄISCHE PATENTANMELDUNG

(21) Anmeldenummer: **84110276.7**

(22) Anmeldetag: **29.08.84**

(51) Int. Cl.⁴: **B 29 D 30/24**, B 60 C 15/04

(30) Priorität: **13.10.83 DE 3337190**

(43) Veröffentlichungstag der Anmeldung: **22.05.85**
**Patentblatt 85/21**

(84) Benannte Vertragsstaaten: **AT BE CH DE FR GB IT LI LU NL SE**

(71) Anmelder: **Janus, Jonny, Kreuzstrasse 53, D-4000 Düsseldorf 1 (DE)**

(72) Erfinder: **Janus, Jonny, Kreuzstrasse 53, D-4000 Düsseldorf 1 (DE)**

(74) Vertreter: **Gille, Christian, Dipl.-Ing. et al, Redles, Redles, Türk & Gille Bruckner Strasse 20, D-4000 Düsseldorf 13 (DE)**

(54) Verfahren zum Herstellen von Cordeinlagen für Radialreifen und für derartige Luftreifen geeigneter Wulstring.

(57) Zum Herstellen von Cordeinlagen für Radialreifen wird ein fortlaufender Cordfaden (7) kontinuierlich um zwei im Abstand voneinander angeordnete Wulstringe (3, 4) derart geschlungen, dass sich seine zwischen den Wulstringen (3, 4) befindlichen Abschnitte (8, 9) schräg zu diesen Wulstringen, aber untereinander parallel erstrecken. Nach Bewickeln der Wulstringe (3, 4) mit Cordfaden werden diese derart gegeneinander verschoben oder verdreht, dass die zwischen ihnen befindlichen Cordfadenabschnitte (8, 9) sämtlich untereinander parallel liegen. Dies wird dadurch möglich, dass der Cordfaden im Bereich der Umschlingungen (14) um die Wulstringe (3, 4) gegen axiales Verschieben auf den Wulstringen gesichert ist, sich hingegen in Umfangsrichtung der Wulstringe frei bewegen kann. Die Wulstringe (3, 4) sind mit Formstücken (10, 11) versehen, welche den von den Cordfadenabschnitten oberhalb der Wulstringe im fertigen Reifen begrenzten keilflörmigen Raum auffüllen, so dass hier keine Lufteinschlüsse möglich sind. Auf dem grössten Teil des Umfanges des torusförmigen Luftreifens liegen die Cordfadenabschnitte der Cordeinlage in einer torusförmigen Ebene nebeneinander und verlaufen exakt im gleichen Abstand voneinander, so dass sie bei geringstmöglichen gegenseitigen Abständen einander nicht berühren.

Jonny Janus, Kreuzstr. 53, 4000 Düsseldorf 1

Verfahren zum Herstellen von Cordeinlagen für Radialreifen und für derartige Luftreifen geeigneter Wulstring

Die Erfindung betrifft ein Verfahren zum Herstellen von Cordeinlagen für Radialreifen, bei dem ein Cordfaden kontinuierlich um zwei im Abstand einander gegenüberliegende Wulstringe geschlungen wird und die zwischen diesen Wulstringen befindlichen Cordfadenabschnitte in eine Ebene nebeneinander gelegt werden, damit die von Wulstring zu Wulstring laufenden Fadenabschnitte nach der Bombage des Luftreifens in einer torusförmigen Ebene nebeneinander liegen. Außerdem betrifft die Erfindung einen Wulstring für Luftreifen und insbesondere für Radialreifen, die eine nach diesem Verfahren hergestellte Cordeinlage enthalten.

Beim Herstellen der Cordeinlage für Radialreifen mit Hilfe eines fortlaufenden Cordfadens (DE-33 03 595 A1) laufen die zwischen den Wulstringen befindlichen Cordfadenabschnitte mit leichter Neigung gegeneinander und somit zickzackförmig zwischen den Wulstringen hin und her, so daß sich der Abstand zwischen benachbarten Cordfadenabschnitten von den Laufflächen des fertigen Luftreifens zu den Wulstringen verringert bzw. erweitert. Außerdem bilden sich durch das Umschlingen der Wulstringe mit dem Cordfaden oberhalb

.../2

der Wulsringe jeweils dreieckförmige Räume zwischen den Cordfadenabschnitten, die vom Gummimaterial vollständig ausgefüllt werden müssen, damit sich dort keine Lufteinschlüsse bilden können. Dies ist jedoch schwierig zu realisieren, so daß hier Ungleichförmigkeiten des fertigen Luftreifens durch Lufteinschlüsse entstehen können.

Der Erfindung liegt die Aufgabe zugrunde, ausgehend von der DE-33 03 595 A1 die Herstellung der Cordeinlage für Luftreifen und insbesondere für Radialreifen derart zu verbessern, daß die Cordfadenabschnitte zwischen den Wulstringen überall praktisch im gleichen Abstand zueinander und radial zu den Wulstringen verlaufen und sich am fertigen Reifen keine durch die Cordeinlage bedingte Ungleichförmigkeiten zeigen.

Diese Aufgabe wird erfindungsgemäß bei einem Verfahren der eingangs genannten Gattung dadurch gelöst, daß die Cordfäden schräg zu den Wulstringen mit parallelen Cordfadenabschnitten zwischen den Wulstringen gewickelt bzw. geschlungen werden, wobei die Wulstringe ggfs. vor der Bombage des Luftreifens so gegeneinander verschoben bzw. verdreht werden, daß die sich zwischen den Wulstringen befindlichen Cordfadenabschnitte weiterhin parallel, nunmehr aber radial zu den Wulstringen verlaufen. Gemäß der Erfindung wird der die Cordeinlage bildende Cordfaden also derart um die Wulstringe gewickelt oder geschlungen, daß sich beim fertigen Luftreifen die zwischen den Wulstringen befindlichen Cordfadenabschnitte praktisch auf ihrer gesamten Länge in gleichförmigem Abstand zueinander erstrecken

.../3

und Schrägstellungen nur im Bereich der Umschlingung um die Wulstringe vorhanden sind. Die Cordfadenabschnitte liegen im Reifenmaterial mit völlig gleichförmiger Spreizung und genau radial in einer torusförmigen Ebene nebeneinander. Dementsprechend hat die Cordeinlage des fertigen Luftreifens auf dem gesamten Umfang des Reifens gleiche Form mit wirklich radial verlaufenden Fäden und dementsprechend gleiche Eigenschaften.

Vorzugsweise wird der Cordfaden an den beiden Wulstringen derart festgelegt, daß seine die Wulstringe umschlingenden Abschnitte sich nicht entlang der Wulstringe verschieben lassen, jedoch in Umfangsrichtung der Wulstringe bewegt werden können, damit eine Relativbewegung bei der Bombage des Luftreifens möglich ist, die zwischen den Wulstringen verlaufenden Cordfadenabschnitte bei der Bombage aber auch bei engster Anordnung einander nicht berühren.

Weiterhin wird zur Lösung der gestellten Aufgabe erfindungsgemäß vorgeschlagen, daß der von den Cordfadenabschnitten oberhalb der Wulstringe begrenzte, etwa keilförmig ausgebildete Raum vor dem Anbringen des Cordfadens an den Wulstringen mit Reifenmaterial ausgefüllt wird. Auf diese Weise erreicht man, daß bei der Herstellung des Luftreifens dieser Raum von vorneherein ohne Lufteinschluß mit Reifenmaterial gefüllt ist. Zusätzlich ergibt sich der Vorteil, daß dieses Füllmaterial benutzt werden kann, um die Position der um die Wulstringe geschlungenen Abschnitte des Cordfadens festzulegen.

4

Ferner wird die Aufgabe der Erfindung mit einem Wulstring der eingangs genannten Gattung gelöst, der mit Halterungen versehen ist, die ein Verschieben des um den Wulstring geschlungenen Cordfadens in Längsrichtung des Wulstringes verhindern, jedoch eine Bewegung in Umfangsrichtung zulassen. Auf diese Weise läßt sich ein völlig gleichmäßiger Schlingenabstand an den Wulstringen eines Luftreifens und eine genau radiale Lage der Cordfadenabschnitte zwischen den Wulstringen erreichen. Bei der Bombage werden die benachbarten Cordfadenabschnitte zwischen den Wulstringen in stets gleichem Abstand zueinander nebeneinander gelegt. Die Cordfadenabschnitte können daher besonders dicht nebeneinander angeordnet werden, ohne daß die Gefahr gegenseitiger Berührungen bestünde.

Beispielsweise sind die Halterungen für die Cordfadenschlingen etwa in Umfangsrichtung bzw. radialer Richtung des Wulstringes verlaufende Rippen und/oder Rillen, die ein Verschieben der Cordfadenschlingen in axialer Richtung des Wulstringes verhindern, andererseits eine Relativbewegung des Cordfadens um den Wulstring herum zulassen, die insbesondere bei der Bombage des Luftreifens erforderlich ist, damit alle freien Cordfadenabschnitte in eine torusförmige Ebene nebeneinander bewegt werden können.

Um zu erreichen, daß vor der Bombage die sich zwischen den Wulstringen erstreckenden Cordfadenabschnitte parallel zueinander gehalten werden und der notwendige Platz für die Zusammenführung der unteren und oberen Cordfadenabschnitte beim Aufwölben in eine gemeinsame Querschnittsebene geschaffen wird, sind die Rippen und/oder Rillen nach einem weiteren Merkmal der Erfindung in einem Winkel zur axialen Richtung bzw. zum Mittelpunkt des Wulstringes geneigt angeordnet. Somit ergibt sich bei der fertigen Cordeinlage eine Schrägstellung des fortlaufenden Cordfadens nur im Bereich der Wulstringe und nicht zwischen denselben.

Nach noch einem anderen Merkmal der Erfindung ist an der beim fertigen Luftreifen in Richtung der Reifenkarkasse weisenden Seite jedes Wulstringes ein ringförmiges Formstück angebracht, das dem Wulstring einen tropfenförmigen Querschnitt verleiht und dazu bestimmt ist, den von den Cordfadenabschnitten im Bereich der Wulstringe begrenzten, etwa keilförmig ausgebildeten Raum auszufüllen. Dieses Formstück besteht vorzugsweise aus anderem Material wie der Wulstring, nämlich beispielsweise aus Gummimaterial und insbesondere Hartgummi, jedoch kann auch anderes Reifenmaterial wie synthetischer vulkanisierter Kautschuk verwendet werden. Dieses profilierte Formstück wird in Links- und Rechtsausführung an den beiden Wulstringen eines Luftreifens angebracht und dient gewissermaßen als Kern oder Füllung für die oberhalb der Wulstringe auf eine gemeinsame Querschnittsebene zulaufenden Cordfadenabschnitte. Das Formstück besteht vorzugsweise aus besonders hartem Gummi und kann mit Vorspannung auf den betreffenden Wulst - ring aufgesetzt sein. Die Bindung zwischen dem Formstück und seinem Wulstring kann aber auch durch ein Haftmittel erzielt oder zumindest verbessert werden.

Das keilförmig profilierte Formstück liegt im fertigen Luftreifen oberhalb des betreffenden Wulstringes im Bereich des
entsprechenden Felgenhornes, so daß sich der Umschlingungsbereich des Cordfadens innerhalb der Radfelge befindet und
die über die Felge überstehenden Flanken des Reifens keine
ihre erwünschte Bewegbarkeit hemmende Versteifung aufweisen. Daher können sich die Flanken des Luftreifens gleichmäßiger und besser als bekannte Luftreifen unter Einfluß
der Betriebsbeanspruchungen ausbeulen.

Vorzugsweise sind auf der Außenflanke oder Außenseite des
Formstückes die als Halterung für den Cordfaden dienenden
Rippen und/oder Rillen angeordnet. Die Rippen und/oder
Rillen lassen sich besser an dem Formstück als am aus
Drahtseil gebildeten Wulstring anbringen, weil sie bei der
Herstellung des Formstückes mitgeformt werden können.

Durch die Erfindung ist es möglich, den fortlaufenden Cordfaden mit wesentlich steilerem Winkel, also dichter, als
gemäß DE 33 03 595.A1 möglich um die Wulstringe zu wickeln.
Durch Verdrehen der fertig bewickelten Wulstringe werden
die zunächst schräg verlaufenden, zwischen ihnen befindlichen parallelen Cordfadenabschnitte in eine Position gebracht, in der sie radial bzw. rechtwinklig zu den Wulstringen liegen und ihre parallele Lage zueinander beibehalten. Die Cordfadenabschnitte können sich daher an keiner
Stelle, d.h. auch nicht an den besonders kritischen Stellen
im Bereich der Wulstringe gegenseitig berühren, so daß ein
Eindringen des Gummimaterials des Luftreifens zwischen die
einzelnen Cordfadenabschnitte auch dann gewährleistet ist,

.../7

wenn diese mit dichterem Abstand als bisher nebeneinander vorgesehen werden.

Die Formstücke können jeweils mit einer Markierung versehen sein, um die für den Wickelvorgang erforderliche Einstellung und die Ausrichtung nach dem Wickeln zu erleichtern. Auch kann an dem Formstück ein Einschnitt vorgesehen sein, in welchem der Anfang des fortlaufenden Cordfadens befestigt wird, so daß der Cordfaden beim Wickeln um die Wulstringe mit ausreichender Festigkeit gehalten wird. Das Cordfadenende kann aber auch mit Hilfe eines Haftmittels am Formstück befestigt werden, wobei dieses Haftmittel allein oder auch in Verbindung mit einem Einschnitt zum Einsatz kommen kann.

Das erfindungsgemäß vorgeschlagene Formstück gewährleistet eine Materialverteilung ohne Lufteinschluß im oberhalb jedes Wulstringes befindlichen, von den Cordfadenschlingungen begrenzten Raum. Außerdem ist eine praxisgerechte Befestigung des Cordfadens nach dem Aufwölben der Cordeinlage bzw. der Bombage des Luftreifens an den inneren und besonders den äußeren Flanken der Formstücke gewährleistet.

In der Zeichnung ist ein Ausführungsbeispiel eines mit einer erfindungsgemäß hergestellten Cordfadeneinlage versehenen Luftreifens dargestellt, wobei auch Einzelheiten der Herstellung der Cordeinlage zu erkennen sind, und zwar zeigt

8

Fig. 1 einen Teilquerschnitt des auf eine Felge aufgesetzten Luftreifens,

Fig. 2 einen Querschnitt eines der beiden Wulstringe des Luftreifens aus Fig. 1,

Fig. 3 eine Teildraufsicht auf zwei einander zugeordnete Wulstringe während des Umwickelns mit einem fortlaufenden Cordfaden zum Erzeugen der Cordeinlage,

Fig. 4 einen senkrechten Schnitt durch die einander gegenüberliegenden Wulstringe während des Bewickelns mit Cordfaden,

Fig. 5 eine im Maßstab vergrößerte Teilansicht der Außenflanke eines Wulstringes, der entsprechend Fig. 4 mit Cordfaden bewickelt ist, und

Fig. 6 eine Draufsicht ähnlich wie in Fig. 3, wobei die Wulstringe jedoch nach dem Bewickeln mit Cordfaden in die endgültige gegenseitige Position gebracht worden sind.

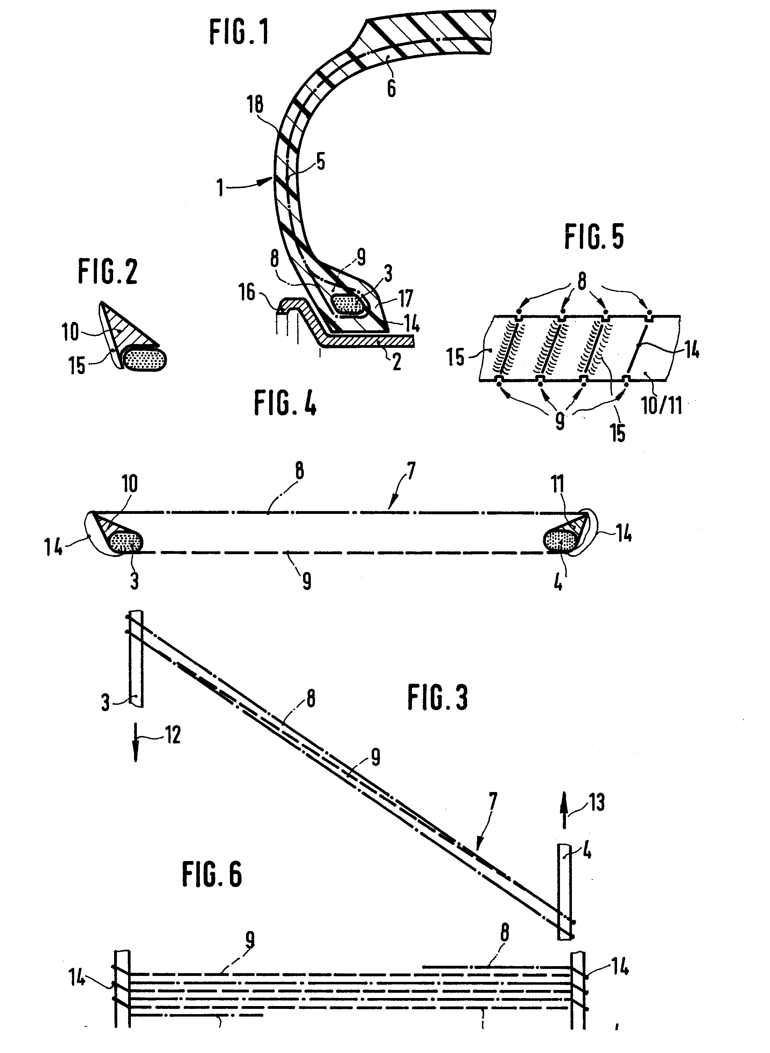

Aus Fig. 1 ist zu erkennen, daß ein im Querschnitt torusförmiger Luftreifen 1 auf einer Felge 2 eines nicht näher dargestellten Rades angebracht ist. Dieser Luftreifen 1 enthält aus Drahtseil bestehende Wulstringe 3 und 4 und eine Cordeinlage 5, die in Gummimaterial 6 eingebettet sind. Die Cordeinlage 5 ist aus einem fortlaufenden Cordfaden 7 gebildet, der die Wulstringe 3 und 4 umschlingend zwischen diesen hin und hergeführt ist und dessen vor- und zurücklaufende Fadenabschnitte 8 und 9 auf dem größten Teil des Umfanges des Luftreifens 1 oberhalb der Wulstringe 3 und 4 in einer torusförmigen Ebene nebeneinander liegen, wie Fig. 1 zeigt.

Im Bereich der Umschlingung des Cordfadens 7 um die Wulstringe 3 und 4 laufen die oberen und unteren Cordfadenabschnitte 8 und 9 keilförmig zusammen, wobei dieser Keil von einem auf den Wulstring 3 bzw. 4 aufgesetzten ringförmigen Formstück 10 bzw. 11 ausgefüllt ist, das einen keilförmigen Querschnitt aufweist und aus Reifenmaterial wie beispielsweise Hartgummi besteht. Die Formstücke 10 und 11 liegen im Bereich des Felgenhornes 16, so daß der auf der Felge 2 liegende Reifenwulst 17 nur wenig über oder garnicht/ die Felge übersteht und die Flanken 18 des Luftreifens 1 daher besonders lang bzw. hoch sind.

Beim Bewickeln der Wulstringe 3 und 4 mit Cordfaden 7 wird dieser gemäß Fig. 3 schräg auf die Wulstringe aufgewickelt, wobei die zwischen den Wulstringen 3 und 4 sich erstreckenden oberen Cordfadenabschnitte 8 und 9 jedoch zunächst nicht parallel zueinander geführt sind. Fig. 5 zeigt, daß der Cordfaden 7 schräg um die einzelnen Wulstringe 3 bzw. 4 gewickelt ist. Dabei sind die Neigung der Schräglage und der Abstand der einzelnen Cordfadenschlingen 14 so gewählt, daß beim Aufwölben der Cordeinlage 5 sich die unteren Cordfadenabschnitte 9 genau in die Mitte zwischen zwei benachbarte obere Cordfadenabschnitte 8 legen.

Nach der Fertigstellung der Bewicklung werden die Wulstringe 3 und 4 gemäß den Pfeilen 12 und 13 relativ zueinander verschoben bzw. gegeneinander verdreht, wobei es ausreicht, wenn einer der Wulstringe gegenüber dem anderen verschoben bzw. verdreht wird. Dadurch werden die Cordfadenabschnitte 8 und 9 in eine derartige Lage verschoben, daß sie sich radial zwischen den Wulstringen 3 und 4 erstrecken und nunmehr untereinander überall parallel liegen, wie Fig. 6 zeigt. Bei der anschließenden Bombage werden die oberen und unteren Cordfadenabschnitte 8 und 9 in eine Ebene gebracht, wozu hier nicht dargestellte, für sich bekannte Hilfsmittel benutzt werden können.

Um die Parallelstellung der Cordfadenabschnitte 8 und 9 beim Verschieben bzw. Verdrehen der Wulstringe 3 und 4 gegeneinander zu erreichen, sind die Cordfadenschlingen 14 im Bereich der Wulstringe 3 und 4 an diesen derart gehalten, daß zwar eine Relativbewegung in Umfangsrichtung, nicht jedoch in Längsrichtung der Wulstringe möglich ist. Daher stehen die Cordfadenschlingen 14 nach dem Verschieben der Wulstringe in einem Winkel zu den Cordfadenabschnitten 8 und 9, wie Fig. 6 zeigt. Um diese Schrägstellung zu erreichen und beizubehalten, sind auf der Außenflanke der Formstücke 10 und 11 entsprechend geneigte Rippen 15 vorgesehen (Fig. 2 und 5), welche die Cordfadenschlingen 14 in der aus Fig. 6 ersichtlichen Position halten. Zusätzlich zu diesen Rippen 15 oder anstelle derselben könnten auch Rillen oder sonstige Vertiefungen in der Außenflanke der Formstücke 10 und 11 vorhanden sein.

Die Rippen 15 ermöglichen es auch, den Cordfaden 7 mit einer entsprechenden Wickeleinrichtung so um die Wulstringe 3 und 4 zu schlingen, daß er von vorneherein radial zwischen den Wulstringen verläuft und nur auf den Wulstringen bzw. deren Formstücken 10 und 11 die gewünschte Schrägstellung erhält.

0141942

1

Jonny Janus, Kreuzstr. 53, 4000 Düsseldorf 1

<u>Patentansprüche</u>

1. Verfahren zum Herstellen von Cordeinlagen für Radialreifen, bei dem ein Cordfaden kontinuierlich um zwei
im Abstand einander gegenüberliegende Wulstringe geschlungen wird und die zwischen diesen Wulstringen befindlichen Cordfadenabschnitte in eine Ebene nebeneinander gelegt werden, damit die von Wulstring zu Wulstring laufenden Fadenabschnitte nach der Bombage des
Reifens in einer torusförmigen Ebene nebeneinander liegen, d a d u r c h   g e k e n n z e i c h n e t, daß
der Cordfaden schräg zu den Wulstringen derart um diese
gewickelt wird,   daß die zwischen den Wulstringen befindlichen Cordfadenabschnitte parallel zueinander und
radial zu den Wulstringen verlaufen.

2. Verfahren nach Anspruch 1, dadurch gekennzeichnet, daß
die Wulstringe nach dem Bewickeln mit dem Cordfaden so
gegeneinander verschoben bzw. verdreht werden, bis alle
zwischen den Wulstringen befindlichen Cordfadenabschnitte parallel zueinander liegen.

3. Verfahren nach Anspruch 1 oder 2, dadurch gekennzeichnet,
daß der Cordfaden an den beiden Wulstringen derart festgelegt wird, daß er entlang den Wulstringen nicht verschiebbar ist.

.../2

4. Verfahren nach einem der Ansprüche 1 bis 3, dadurch gekennzeichnet, daß der von den Cordfadenabschnitten nach der Bombage oberhalb der Wulstringe begrenzte Raum vor dem Anbringen des Cordfadens an den Wulstringen mit Reifenmaterial ausgefüllt wird.

5. Wulstring für Luftreifen, insbesondere für Radialreifen, mit einer nach dem Verfahren aus einem der Ansprüche 1 bis 4 hergestellten Cordeinlage, d a d u r c h  g e k e n n z e i c h n e t, daß er mit Halterungen (15) versehen ist, die ein Verschieben des um den Wulstring (3;4) geschlungenen Cordfadens (7) in Längsrichtung des Wulstringes verhindern.

6. Wulstring nach Anspruch 5, dadurch gekennzeichnet, daß die Halterungen etwa in radialer Richtung des Wulstringes (3;4) verlaufende Rippen (15) und/oder Rillen sind.

7. Wulstring nach Anspruch 6, dadurch gekennzeichnet, daß die Rippen (15) und/oder Rillen in einem Winkel zum Mittelpunkt des Wulstringes (3;4) geneigt verlaufen.

8. Wulstring nach einem der Ansprüche 5 bis 7, dadurch gekennzeichnet, daß an seiner beim fertigen Luftreifen (1) in Richtung der Reifenkarkasse weisenden Seite ein ringförmiges Formstück (10;11) angebracht ist, das dem Wulstring (3;4) einen tropfenförmigen Querschnitt verleiht.

9. Wulstring nach Anspruch 8, dadurch gekennzeichnet, daß das Formstück (10;11) aus Gummimaterial, insbesondere Hartgummi, besteht.

10. Wulstring nach Anspruch 8 oder 9, dadurch gekennzeichnet, daß auf der Außenflanke des Formstückes (10;11) die als Halterung für den Cordfaden (3) dienenden Rippen (15) und/oder Rillen angeordnet sind.

G/b

FIG.1

FIG.2

FIG.4

FIG.5

FIG.3

FIG.6

**Europäisches Patentamt**

## EUROPÄISCHER RECHERCHENBERICHT

Nummer der Anmeldung

| EINSCHLÄGIGE DOKUMENTE | | | EP 84110276.7 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| D,A | DE - A1 - 3 303 595 (JANUS)<br>* Fig. 1-3,25 *<br>-- | 1,5 | B 29 D 30/24<br>B 60 C 15/04 |
| A | FR - A - 505 019 (REMY)<br>* Fig. 1 *<br>-- | 1 | |
| A | US - A - 2 139 840 (MC KONE)<br>* Fig. 8-12 *<br>---- | 1,2 | |
| | | | **RECHERCHIERTE SACHGEBIETE (Int. Cl.4)**<br><br>B 29 H<br>B 60 C |

Der vorliegende Recherchenbericht wurde für alle Patentansprüche erstellt.

| Recherchenort | Abschlußdatum der Recherche | Prüfer |
|---|---|---|
| WIEN | 02-01-1985 | WIDHALM |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPA Form 1503 03 82